# EUROPÄISCHE PATENTSCHRIFT

(11) **EP 3 569 934 B1**
(45) Veröffentlichungstag und Bekanntmachung des Hinweises auf die Patenterteilung: **06.09.2023**
(21) Anmeldenummer: 19172938.3
(22) Anmeldetag: 07.05.2019
(51) Int. Cl.: F24D 3/16, F24F 5/00, F24F 13/24

(54) **STRAHLFLÄCHENAUFBAU MIT ABSORPTIONSEINRICHTUNG**
RADIATING SURFACE STRUCTURE WITH ABSORPTION DEVICE
STRUCTURE DE SURFACE RAYONNANTE POURVUE DE DISPOSITIF D'ABSORPTION

(30) Priorität: 18.05.2018 DE 102018207940
(43) Veröffentlichungstag der Anmeldung: 20.11.2019
(73) Patentinhaber: Frenger Systemen BV Heiz- und Kühltechnik GmbH, 64823 Gross-Umstadt (DE)
(72) Erfinder: MENGE, Klaus, 64823 Gross-Umstadt (DE)
(74) Vertreter: Leske, Thomas

(56) Entgegenhaltungen:
- DE-A1-102014 109 299
- DE-C- 962 931
- DE-U1-202004 003 321
- DE-U1-202016 107 007
- FR-A5- 2 159 598

## Beschreibung

Die Erfindung betrifft einen Strahlflächenaufbau zum Temperieren eines Raumes mit einer dem zu temperierenden Raum zugewandten Deckenstrahlplatte und einem mit einem von einem Wärmeübertragungsmedium durchströmten Rohrregister verbunden ist. Als flächige Elemente ausgebildete Strahlflächenplatten sind bekannt; sie werden auch als Heiz-/Kühlsegel bezeichnet und werden in der Regel von der Decke eines Raumes abgehängt, um diesen zu temperieren, also nach Bedarf zu kühlen oder zu heizen.

In dem Gebrauchsmuster DE 297 02 313 U1 wird dementsprechend vorgeschlagen, derartige Strahlflächenaufbauten zusätzlich auch als Dämmelemente gegen akustische Einflüsse zu verwenden. Auf der raumabgewandten Seite des Strahlflächenaufbaus ist hierzu eine Dämmschicht vorgesehen, welche wärmedämmend und schallabsorbierend ausgebildet ist. Die wärmedämmende Eigenschaft ist erforderlich, damit von dem Strahlflächenaufbau die abgestrahlte Energie in den zu temperierenden Raum abgegeben wird, nicht aber in Richtung auf die Decke abstrahlen kann. Diese Dämmschicht dient bzw. kann gleichzeitig als akustisches Absorptionsmaterial dienen. Damit trägt die ohnehin vorzusehende Dämmschicht auch zur Reduzierung des Lärms in einem zu temperierenden Raum wie beispielsweise Turnhallen, Produktionshallen etc. bei. Es ist also damit möglich, neben der Regulierung der Temperatur des Raumes auch den Geräuschpegel in dem betreffenden Raum zu verringern.

In dem Gebrauchsmuster DE 93 21 610 U1 werden schallschluckende Leichtbauplatten beschrieben, in welche ein Fluidrohrnetz eingebettet ist, das der Wärmeableitung dient und an eine Kühlmittelquelle angeschlossen ist.

Des Weiteren ist zur Reduzierung des Geräuschpegels beispielsweise aus der WO 96/12 144 A1 bekannt, ein Deckenelement für eine Heiz- und Kühldecke mit einer Isoliermatte zu versehen. Zur Temperierung des Deckenelementes wird ein Wärmeübertragungsmedium durch einen mäanderförmig ausgerichteten Schlauch geleitet. Zusätzlich kann in einem Randbereich der Deckenplatte ein Akustikvlies vorgesehen sein.

In DE 20 2008 001 602 U1 ist es des Weiteren ein Schallabsorber mit einem Deckensegel beschrieben, welches schallabsorbierendes Material enthalten kann oder aus diesem sogar besteht. Auf dem Deckensegel kann ein Niederfrequenzabsorber angebracht werden, welcher zur Verbesserung der Abriebfestigkeit beschichtet oder ummantelt sein kann.

In DE 195 00 670 C1 ist eine Kühlvorrichtung mit einer perforierten Verkleidungsplatte und mit einem dem zu temperierenden Raum abgewandten Dämmmaterial beschrieben, welches sowohl wärme- als auch schalldämmend wirkt.

Auch aus DE 10 2009 055 440 A1 ist ein Deckenelement zur Temperierung eines Raumes bekannt, welches ein Vlies aufweist, um eine gute Schallabsorption sicherzustellen. Zur Verkleidung des Deckenelementes wird eine perforierte Graphitfolie vorgeschlagen, wobei die Löcher der Perforation das Eindringen von Schallwellen in das Deckenelement erlauben. Die Schallwellen können so innerhalb des Deckenelementes gedämpft bzw. reduziert werden, wodurch die Gesamtschallabsorption erhöht bzw. verbessert wird.

In FR 2 159 598 A5, welche einen Strahlflächenaufbau gemäß dem Oberbegriff des Anspruchs 1 offenbart, ist ein Strahlflächenaufbau zum Temperieren eines Raumes mit einer Deckenstrahlplatte beschrieben, welche dem zu temperierenden Raum zugewandt ist und ein Rohrregister aufweist, durch welches ein Wärmeübertragungsmedium strömt. Zur Schallabsorption ist eine Absorptionseinrichtung in Form einer schallabsorbierenden Matte vorgesehen. Spezielle bzw. separat vorgesehene mit einem schallabsorbierenden Material gefüllte Absorptionsboxen sind jedoch neben der in üblicher Weise bei derartigen Strahlflächenaufbauten verwendeten Isolationsmatte nicht vorgesehen. Entsprechend erreicht eine Deckenstrahlplatte mit einer Isoliermatte nicht die gewünschten schallreduzierenden Eigenschaften.

Und schließlich ist in DE 10 2011 121 164 B4 ein Strahlflächenaufbau beschrieben, bei welchem eine als Absorptionsbox ausgebildete Absorptionseinrichtung zur Reduzierung des Geräuschpegels auf der dem zu temperierenden Raum abgewandten Seite einer Deckenstrahlplatte angebracht ist. Diese bekannte Absorptionsbox weist Perforationsöffnungen in ihren Längsseitenwänden auf, damit der Schall in das Innere der Absorptionsbox gelangen kann und dort gedämpft werden kann, weil die Absorptionsbox vorzugsweise mit einem schalldämmenden Material gefüllt ist. Besonders im mittleren und hochfrequenten Bereich werden mit den aus Kunststoff bestehenden Absorptionsboxen relativ gute Ergebnisse hinsichtlich der Reduzierung des Geräuschpegels in dem Raum erreicht. Vor allen Dingen im niederfrequenten Bereich sind die Ergebnisse der Geräuschreduzierung aber noch nicht zufriedenstellend.

Es ist daher die Aufgabe der vorliegenden Erfindung, einen Strahlflächenaufbau der eingangs genannten Art bereitzustellen, der eine verbesserte Schallabsorption vor allen Dingen auch im niederfrequenten Bereich innerhalb eines Raumes ermöglicht, bei welchem aber im Wesentlichen gleichbleibende Temperierungseigenschaften des Strahlflächenaufbaus beibehalten werden.

Diese Aufgabe wird mit einem Strahlflächenaufbau mit den Merkmalen gemäß Anspruch 1 gelöst. Zweckmäßige Weiterbildungen sind in den abhängigen Ansprüchen definiert.

Gemäß der Erfindung weist der Strahlflächenaufbau zum Temperieren eines Raumes eine dem zu temperierenden Raum zugewandte Deckenstrahlplatte und ein mit einem von einem Wärmeübertragungsmedium durchströmtes Rohrregister auf. Die Deckenstrahlplatte des Strahlflächenaufbaus weist auf der dem temperierenden Raum abgewandten Seite zusätzlich zumindest eine mit einem schallabsorbierenden Material gefüllte Absorptionseinrichtung zur Schallabsorption auf.

Gemäß der Erfindung ist die Absorptionseinrichtung im Sinne einer Absorptionsbox vorzugsweise quaderförmig oder rohrförmig ausgebildet und sind ihre Wände als geschlossene Flächen ohne Perforationsöffnungen und vorzugsweise aus Aluminium oder Stahl ausgebildet. Die Absorptionseinrichtung ist auf der dem zu temperierenden Raum abgewandten, in Einbaulage oberen Seite der Deckenstrahlplatte vorzugsweise in deren Längsrichtung oder Querrichtung sich erstreckend angeordnet. Überraschenderweise hat sich gezeigt, dass der im Stand der Technik bekannte Aufbau mit definierten Perforationsöffnungen, welcher in der Herstellung erheblich aufwendiger ist als die Verwendung von glatten und geschlossenen Wänden, verbessert werden kann, wenn vorzugsweise Aluminium- oder Stahlabsorptionseinrichtungen mit geringer Blechdicke in Form von im Querschnitt trapezförmigen oder quaderförmigen oder röhrenförmigen Absorptionsboxen verwendet werden, welche vor allen Dingen im niederfrequenten Bereich zusätzliche Schallpegelverminderungen schaffen. Ohne Perforationsöffnungen soll hier bedeuten, dass die entsprechenden Wände keine Vielzahl von Bohrungen oder Öffnungen aufweisen. Allenfalls können einige wenige oder gar nur eine Bohrung vorhanden sein.

Vorzugsweise ist auf der dem zu temperierenden Raum abgewandten Seite eine Dämmschicht angeordnet, welche vorzugsweise so ausgebildet ist, dass sie sowohl wärmedämmend wirkt, um zu verhindern oder zu reduzieren, dass Wärme in Richtung der Decke, nicht aber in Richtung des zu temperierenden Raumes, abgestrahlt wird, als auch der Geräuschpegel in dem zu temperierenden Raum verringert wird. Dabei ergänzen sich die Dämmschicht und die Absorptionseinrichtung dahingehend, dass sie beide einen Beitrag zur Schallabsorption und damit zur Schallpegelverminderung leisten. Die aus Aluminium oder Stahl bestehende Absorptionseinrichtung ist mit einem schallabsorbierenden Material gefüllt, was zusätzliche Verbesserungen bei der Schallabsorption bietet. Es wird also mit der neuartigen vorzugsweise quaderförmigen Schallabsorptionseinrichtung ein deutlich verbesserter Schallabsorptionsgrad αₛ für den zu temperierenden Raum erreicht. Damit wird ein vereinfachter Aufbau der Deckenstrahlelemente hinsichtlich ihrer Schallabsorptionseinrichtungen erreicht, wobei neben einer im breiten Frequenzspektrum gewährleistenden Schallabsorption vor allen Dingen im niederfrequenten Bereich eine zusätzliche höhere Schallabsorption gewährleistet ist.

Vorzugsweise ist dafür beidseitig der in Längsrichtung oder Querrichtung vorzugsweise mittig angeordneten Absorptionseinrichtung je wenigstens eine weitere parallel dazu sich erstreckende weitere Absorptionseinrichtung angeordnet. Überraschenderweise hat sich gezeigt, dass bei einer derartigen Mehrfachanordnung von vorzugsweise jeweils aus Aluminium oder Stahl bestehenden Absorptionseinrichtungen auf der dem zu temperierenden Raum abgewandten Seite, d. h. der Decke zugewandten Seite, für den Niederfrequenzbereich vor allen Dingen eine erheblich verbesserte Schallabsorption erreicht werden kann. Vorzugsweise sind sämtliche Absorptionseinrichtungen mit einem schallabsorbierenden Material gefüllt. Da die Absorptionseinrichtungen wegen ihrer nicht perforierten Wände relativ einfach in der Herstellung sind, wird ein gutes Ergebnis hinsichtlich der Schallabsorption bei moderaten Herstellungskosten erreicht.

Vorzugsweise weist die Schallabsorptionseinrichtung wenigstens eine vollständig offene Seite auf, welche in der Regel die Unterseite der Absorptionseinrichtung ist, mit welcher die Absorptionseinrichtung auf der der Decke des zu temperierenden Raumes zugewandten Seite vorzugsweise im Kontakt mit der vorzugsweise vorhandenen Dämmschicht aufgebracht ist.

Es ist jedoch auch möglich, dass die mit schallabsorbierendem Material gefüllte Absorptionseinrichtung aus Aluminium oder Stahl geschlossene und perforationsöffnungsfreie Seitenwände aufweist, dass aber die weiteren Absorptionseinrichtungen vorzugsweise an ihren Seitenwänden mit Perforationsöffnungen versehen sind, welche vorzugsweise in einem Rastermuster angeordnet sind. Vorzugsweise sind diese weiteren Absorptionsboxen in an sich bekannter Weise aus Kunststoff hergestellt. Die Stirnseiten und vorzugsweise auch die Oberseite, welche zur Decke des zu temperierenden Raumes gewandt ist, sind als geschlossene und perforationsöffnungsfreie Wände ausgebildet. Damit ist es möglich, die Vorteile der bisher bekannten, mit Öffnungen versehenen Absorptionseinrichtungen mit denen ohne derartige Perforationsöffnungen versehenen Absorptionseinrichtungen vor allen Dingen aus Aluminium oder Stahl für Reduzierungen von niederfrequenten Schallpegeln zu kombinieren.

Vorzugsweise kann als schallabsorbierendes Material im Innern der Absorptionseinrichtungen Mineralwolle verwendet werden.

Zur weiteren Verbesserung der Schallabsorption kann weiter vorzugsweise vorgesehen sein, dass die Absorptionsboxen in ihrem Innern zusätzlich mit einem Akustikvlies verkleidet sind.

Hinsichtlich der Größe der Absorptionseinrichtungen hat sich herausgestellt, dass vorzugsweise dann eine gute Schallabsorption gewährleistet werden kann, wenn das Verhältnis der Grundfläche zumindest der einen Absorptionseinrichtung zur Grundfläche der Deckenstrahlplatte in einem Bereich von > 0,05 und <0,5, insbesondere im Bereich von 0,1 bis 0,2, liegt.

Weiter vorzugsweise sind die Absorptionseinrichtungen in einer derartigen Größe und Anordnung auf der Deckenstrahlplatte vorgesehen, dass sie zu den freien Rändern der Deckenstrahlplatte um eine Strecke beabstandet sind, die wenigstens der Höhe der Absorptionsbox entspricht. Dies hat nicht nur ästhetische Gründe, sondern sichert auch einen gewissen Schutz der Absorptionseinrichtungen, wenn beispielsweise derartige Deckenstrahlelemente in Turnhallen verwendet werden, und zur Decke springende Bälle dann die Absorptionseinrichtungen ja nicht direkt treffen können.

Weiter vorzugsweise ist die Absorptionseinrichtung so ausgebildet, dass der Schallabsorptionsgrad αₛ, gemessen nach ISO 354/2003, in einem Frequenzbereich zwischen 125 und 5.000 Hz > 0,8 ist. Insbesondere soll vorzugsweise der Schallabsorptionsgrad αₛ in einem Frequenzbereich von 250 bis 2.500 Hz im Bereich von 1,4 bis ca. 1,5 liegen. Bei einer Messung des Schallabsorptionsgrades αₛ nach ISO 11.654 liegt der Schallabsorptionsgrad in einem Frequenzbereich zwischen 1.000 und 2.000 Hz bei wenigstens 1,4 bis 1,6.

Die Erfindung wird nachfolgend anhand eines Ausführungsbeispiels und unter Bezugnahme auf die Zeichnung näher erläutert. In der Zeichnung zeigen schematisch:
- Figur 1: ein Beispiel eines Strahlflächenaufbaus mit einem Deckenstrahlelement gemäß der Erfindung;
- Figur 2: eine Längsseitenwand einer Absorptionseinrichtung aus Kunststoff gemäß dem Stand der Technik;
- Figur 3: eine Darstellung einer Schnittansicht gemäß einer Schnittebene A-A gemäß Figur 1; und
- Figur 4: ein Diagramm eines Schallabsorptionsgrad-Frequenz-Ganges von zwei Ausführungsbeispielen im Vergleich zum Stand der Technik.

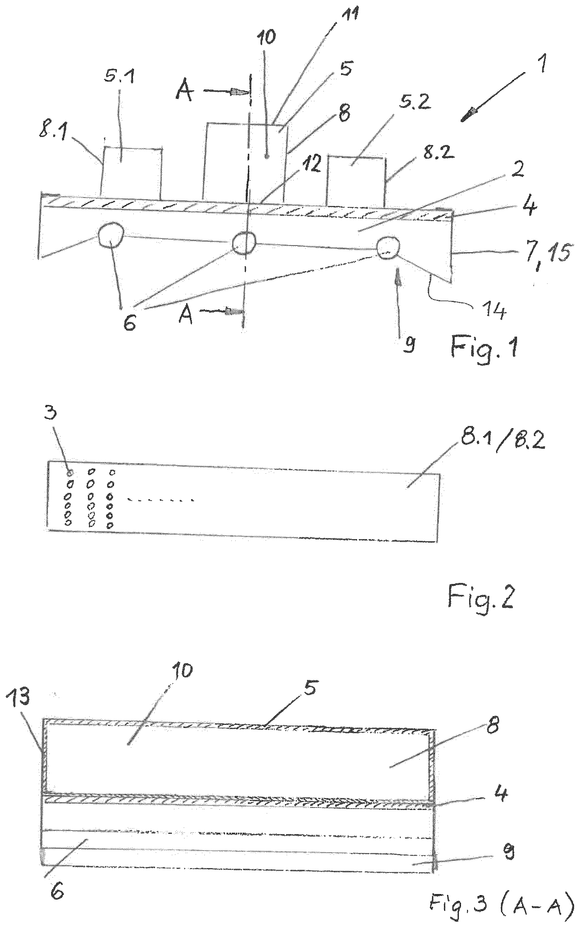

In Figur 1 ist eine Schnittansicht in Richtung der Längserstreckung eines Strahlflächenaufbaus 1 gemäß der Erfindung gezeigt. Gemäß diesem Ausführungsbeispiel weist der Strahlflächenaufbau 1 ein Deckenstrahlelement 2 auf, das in an sich bekannter Weise hinsichtlich seines Grundaufbaus ein mit einem Wärmeträgermedium durchströmtes Rohrregister 6 aufweist, zwischen welchem Strahlplatten 14 angeordnet sind, wobei sich von den äußeren Rohren des Rohrregisters 6 Strahlplatten nach unten schräg verlaufend erstrecken und nach oben im Wesentlichen senkrecht als Strahlplattenseitenwandelemente 15 verlaufen, so dass zwischen den äußeren Rohren des Rohrregisters 6 und den Seitenwandelementen 15 ein Staurand gebildet ist, welcher einen Stauraum 9 begrenzt. Dieser Stauraum 9 ist in an sich bekannter Weise dafür vorgesehen, Konvektion zu verhindern, um den Anteil an Strahlungsenergie in den zu temperierenden Raum zu transportieren und die entsprechende Verlustleistung zu reduzieren.

Auf der in Figur 1 dargestellten Oberseite der Deckenstrahlplatte 2, welche den zu temperierenden Raum abgewandt und dem in Einbaulage zur Decke des zu temperierenden Raumes hingewandten Oberseite 11 entspricht, ist eine Dämmschicht 4 vorgesehen, welche von den Seitenwandelementen 7 an den Rändern übergriffen ist. Diese Dämmschicht 4 dient einerseits dazu, dass sichergestellt wird, dass die für den zu temperierenden, d. h. zu heizenden, Raum genutzte Strahlungsenergie nicht in Richtung der Decke abgestrahlt wird. Diese Dämmschicht hat gleichermaßen die Eigenschaft, schallabsorbierend zu wirken.

Auf der der Decke zugewandten Seite, d. h. der Oberseite der Dämmschicht 4, ist mittig eine Absorptionseinrichtung 5 in Form eines quaderförmigen Aufbaus angeordnet, welche mit ihrer offenen Unterseite 12 auf der Dämmschicht 4 aufsitzt und dort befestigt ist, mit ihrer Oberseite 11 in Richtung der Decke ausgerichtet ist und mit ihrer Längsachse zur Längserstreckung des Deckenstrahlelementes 2 ausgerichtet ist. Entsprechende Längsseitenwände 8 begrenzen die Absorptionseinrichtung 5 seitlich. Die Absorptionseinrichtung 5 besteht aus Aluminium oder Stahl und weist geschlossene perforationslochfreie Seitenplatten 8, d. h. Seitenwände, auf. Im Innern der Absorptionseinrichtung 5 ist schallabsorbierendes Material 10, insbesondere Mineralwolle, vorgesehen. Es hat sich gezeigt, dass entgegen den im Stand der Technik üblichen Ausbildungen von Kunststoffabsorptionseinrichtungen mit einer Vielzahl von Perforationsöffnungen zumindest in den Seitenwänden abgewichen werden kann, indem glatte, einfach herzustellende Wände aus Aluminium oder Stahl verwendet werden können und dass mit einem derartigen Aufbau der Absorptionseinrichtungen vor allen Dingen im niederfrequenten Bereich ein relativ hoher Schallabsorptionsgrad erreicht werden kann. Der Schallabsorptionsgrad kann weiter verbessert werden, indem, wie in dem Ausführungsbeispiel gemäß Figur 1 gezeigt, parallel zu der Absorptionseinrichtung 5 auf der der Decke zugewandte Seite des Deckenstrahlelementes 2 weitere, beidseitig zu der mittig auf dem Deckenstrahlelement 2 angeordneten Absorptionseinrichtung 5 weitere Absorptionseinrichtungen 5.1 und 5.2 vorgesehen sind. Vorzugsweise sind auch diese Absorptionseinrichtungen aus Aluminiumblech oder dünnem Stahlblech mit geschlossenen und perforationsöffnungsfreien Wänden ausgebildet.

In Figur 2 ist beispielhaft eine Längsseitenwand 8.1 bzw. 8.2 von parallel zur mittig angeordneten Absorptionseinrichtung vorgesehenen weiteren Absorptionseinrichtungen dargestellt, welche jedoch in herkömmlicher Art und Weise aus Kunststoff bestehen und mit Perforationsöffnungen in einem Rastermuster versehene Längsseitenwände aufweisen. Mit einer derartigen kombinierten Anordnung werden die Vorteile der bekannten Absorptionseinrichtungen mit denen der gemäß dieser Erfindung vorliegenden Absorptionseinrichtungen kombiniert. Der Einfachheit halber sind nur beispielhaft im linken Teil der Zeichnung die Perforationsöffnungen eingezeichnet. Es versteht sich, dass diese sich über die gesamte Längsseitenwand 8.1 bzw. 8.2 erstrecken bzw. in der gesamten Fläche ausgebildet sind.

Figur 3 zeigt eine Längsschnittansicht in der Ebene A-A des Deckenstrahlelementes 2 gemäß Figur 1. Die Absorptionseinrichtung 5 hat einen quaderförmigen, d. h. kastenförmigen Aufbau und besteht aus glatten, perforationsöffnungsfreien, also geschlossenen Seitenwänden aus Aluminium oder Stahl. Die Längsseitenwände 8 wie auch die Stirnseiten 13 sind in Figur 3 in Schnittansicht gezeigt, wobei im Innern schallabsorbierendes Material vorgesehen ist, was nicht näher eingezeichnet ist. Die in Blickrichtung der Zeichnung hintere Längsseitenwand 8 weist ebenfalls eine geschlossene und perforationsöffnungsfreie Struktur aus Aluminium auf. Die Dämmschicht 4 stellt im Sinne eines zweiten Ausführungsbeispiels sozusagen eine Auflage zu einer geschlossenen Unterseite der Absorptionseinrichtung dar, welche auf deren zur Decke weisenden Oberseite sitzt. Darunter befindet sich das Rohrregister 6, welches von einem wärmetragenden Medium durchströmt ist, um Strahlungsenergie in den zu temperierenden Raum abzustrahlen. Zur Verringerung der Konvektion bilden die Strahlplatten 15 der Seitenwandelemente einen Stauraum 9.

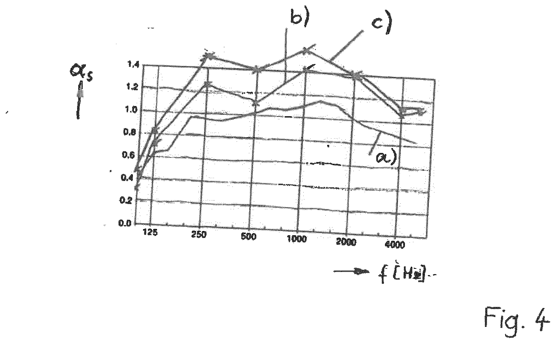

In Figur 4 ist ein Diagramm dargestellt, was den Schallabsorptionsgrad αₛ über der Frequenz zeigt. Die eingetragene Kurve a) stellt den Schallabsorptionsgrad-Frequenz-Gang eines Kühlsegels mit eingelagerter Akustikdämmung dar. Die Kurve zeigt, dass schon recht gute Schallabsorptionsergebnisse über einen relativ breiten Frequenzbereich von ca. 100 bis ca. 4.000 Hz erreicht werden. Die in dem Diagramm gemäß Figur 4 darüberliegende Kurve b) stellt den Schallabsorptionsgrad-Frequenz-Gang für eine Absorptionseinrichtung dar, welche zwei aus Kunststoff bestehende Absorptionseinrichtungen gemäß dem Stand der Technik aufweist, welche sich gemäß diesem Ausführungsbeispiel in Längsrichtung des Deckenstrahlelementes 2 erstrecken (siehe Figur 1 gemäß 2. Ausführungsbeispiel mit Längsseitenwänden gemäß Figur 2). Und schließlich ist in dem Diagramm gemäß Figur 4 die Kurve c) eingezeichnet, welche den Schallabsorptionsgrad-Frequenz-Gang einer erfindungsgemäßen Absorptionseinrichtung und zwei weiterer Absorptionseinrichtungen 5.1 und 5.2 zeigt. In überraschender Weise hat sich gezeigt, dass die Aluminiumabsorptionseinrichtungen mit geschlossenen und perforationsöffnungsfreien glatten Wänden die besten Absorptionsergebnisse für den Schall, vor allen Dingen auch im Niederfrequenzbereich, gewährleisten.

### Bezugszeichenliste:

- 1: Strahlflächenaufbau
- 2: Deckenstrahlplatte
- 3: Perforationsöffnungen
- 4: Dämmschicht
- 5: Absorptionseinrichtung
- 5.1: weitere Absorptionseinrichtung
- 5.2: weitere Absorptionseinrichtung
- 6: Rohrregister
- 7: Seitenwandelement
- 8: Längsseitenwand Aluminium-Absorptionseinrichtung
- 8.1: Längsseitenwand Kunststoff-Absorptionseinrichtung
- 8.2: Längsseitenwand Kunststoff-Absorptionseinrichtung
- 9: Stauraum
- 10: schallabsorbierendes Material
- 11: Oberseite
- 12: Unterseite
- 13: Stirnwand
- 14: Strahlplatten zwischen Rohrregister
- 15: Strahlplatten Seitenwandelemente
- a): Schallabsorptionsgrad-Frequenz-Gang Kühlsegel mit eingelagerter Akustikdämmung
- b): Schallabsorptionsgrad-Frequenz-Gang zwei Kunststoffabsorptionseinrichtungen
- c): Schallabsorptionsgrad-Frequenz-Gang Aluminiumabsorptionseinrichtung plus zwei Kunststoff-Absorptionseinrichtungen

## Patentansprüche

1. Strahlflächenaufbau (1) zum Temperieren eines Raumes mit einer Deckenstrahlplatte (2), die dem zu temperierenden Raum zugewandt ist, und mit einem von einem Wärmeübertragungsmedium durchströmten Rohrregister (6) und zusätzlich zumindest einer mit einem schallabsorbierenden Material (10) gefüllten Absorptionseinrichtung (5) zur Schallabsorption, wobei die Absorptionseinrichtung (5) auf der dem zu temperierenden Raum abgewandten, in Einbaulage oberen Seite (11) der Deckenstrahlplatte (2) in deren Längsrichtung oder Querrichtung sich erstreckend angeordnet ist, **dadurch gekennzeichnet, dass** die Absorptionseinrichtung (5) als Absorptionsbox ausgebildet ist und ihre Wände (8, 11, 13) als geschlossene Flächen ohne Perforationsöffnungen (3) ausgebildet sind.

2. Strahlflächenaufbau nach Anspruch 1, **dadurch gekennzeichnet, dass** auf der dem zu temperierenden Raum abgewandten Seite der Deckenstrahlplatte (2) eine Dämmschicht (4) angeordnet ist.

3. Strahlflächenaufbau nach Anspruch 1 oder 2, **dadurch gekennzeichnet, dass** die Absorptionseinrichtung quaderförmig oder röhrenförmig ausgebildet ist.

4. Strahlflächenaufbau nach einem der Ansprüche 1 bis 3, **dadurch gekennzeichnet, dass** die Absorptionseinrichtung aus Stahl oder Aluminium ausgebildet ist.

5. Strahlflächenaufbau nach einem der Ansprüche 1 bis 4, **dadurch gekennzeichnet, dass** beidseitig der in Längsrichtung der Deckenstrahlplatte (2) mittig angeordneten Absorptionseinrichtung (5) zumindest je eine weitere parallel dazu sich erstreckende weitere Absorptionseinrichtung (5.1, 5.2) angeordnet ist.

6. Strahlflächenaufbau nach Anspruch 5, **dadurch gekennzeichnet, dass** die weiteren Absorptionseinrichtungen (5.1, 5.2) aus Aluminium oder Stahl sind und ihre Seitenwände geschlossen ohne Perforationsöffnungen (3) ausgebildet sind.

7. Strahlflächenaufbau nach Anspruch 5, **dadurch gekennzeichnet, dass** die weiteren Absorptionseinrichtungen (5.1, 5.2) geschlossene perforationsöffnungsfreie Stirnwände (13) und eine geschlossene perforationsöffnungsfreie Oberseite (11) aufweisen.

8. Strahlflächenaufbau nach einem der Ansprüche 5 bis 7, **dadurch gekennzeichnet, dass** die Absorptionseinrichtungen (5, 5.1, 5.2) mit einem Dämmmaterial (10), insbesondere Mineralwolle, gefüllt sind.

9. Strahlflächenaufbau nach einem der Ansprüche 1 bis 8, **dadurch gekennzeichnet, dass** die Absorptionseinrichtungen (5, 5.1, 5.2) in ihrem Inneren mit einem Akustikvlies verkleidet sind.

10. Strahlflächenaufbau nach einem der Ansprüche 1 bis 9, **dadurch gekennzeichnet, dass** das Verhältnis der Grundfläche der zumindest einen Absorptionseinrichtung (5) zur Grundfläche der Deckenstrahlplatte (2) größer als 0,05 und kleiner als 0,5, insbesondere 0,1 bis 0,2, ist.

11. Strahlflächenaufbau nach einem der Ansprüche 1 bis 10, **dadurch gekennzeichnet, dass** die Absorptionseinrichtungen (5, 5.1, 5.2) zu den freien Rändern der Deckenstrahlplatte (2) um eine Strecke beabstandet sind, die wenigstens der Höhe der Absorptionseinrichtung (5) entspricht.

## Claims

1. Radiant surface structure (1) for tempering a room with a radiant ceiling panel (2) facing the room to be tempered, and with a pipe register (6) through which a heat transfer medium flows and additionally at least one absorption device (5) filled with a sound-absorbing material (10) for sound absorption, the absorption device (5) being arranged on the side (11) of the radiant ceiling panel (2) facing away from the room to be tempered and extending in the longitudinal or transverse direction thereof in the installation position, **characterised in that** the absorption device (5) is constructed as an absorption box and its walls (8, 11, 13) are constructed as closed surfaces without perforation openings (3).

2. Radiant surface structure according to claim 1, **characterised in that** an insulating layer (4) is arranged on the side of the radiant ceiling panel (2) facing away from the room to be heated.

3. Radiant surface structure according to claim 1 or 2, **characterised in that** the absorption device is cuboidal or tubular.

4. Radiant surface structure according to one of claims 1 to 3, **characterised in that** the absorption device is made of steel or aluminium.

5. Radiant surface structure according to one of claims 1 to 4, **characterised in that** at least one further absorption device (5.1, 5.2) extending parallel thereto is arranged on each side of the absorption device (5) arranged centrally in the longitudinal direction of the radiant ceiling panel (2).

6. Radiant surface structure according to claim 5, **characterised in that** the further absorption devices (5.1, 5.2) are made of aluminium or steel and their side walls are closed without perforation openings (3).

7. Radiant surface structure according to claim 5, **characterised in that** the further absorption devices (5.1, 5.2) have closed perforation-opening-free end walls (13) and a closed perforation-opening-free upper side (11).

8. Radiant surface structure according to one of the claims 5 to 7, **characterised in that** the absorption devices (5, 5.1, 5.2) are filled with an insulating material (10), in particular mineral wool.

9. Radiant surface structure according to one of the claims 1 to 8, **characterised in that** the absorption devices (5, 5.1, 5.2) are covered in their interior with an acoustic fleece.

10. Radiant surface structure according to one of claims 1 to 9, **characterised in that** the ratio of the base area of the at least one absorption device (5) to the base area of the ceiling radiant panel (2) is greater than 0.05 and less than 0.5, in particular 0.1 to 0.2.

11. Radiant surface structure according to one of claims 1 to 10, **characterised in that** the absorption devices (5, 5.1, 5.2) are spaced apart from the free edges of the ceiling radiant panel (2) by a distance which corresponds to at least the height of the absorption device (5).

## Revendications

1. Structure de surface rayonnante (1) pour conditionner en température une pièce avec un panneau rayonnant de plafond (2) qui est tourné vers la pièce à conditionner en température et avec un registre tubulaire (6) traversé par un fluide de transfert de chaleur et en plus au moins un dispositif d'absorption (5) rempli d'un matériau absorbant le son (10) pour l'absorption du son,
le dispositif d'absorption (5) étant disposé sur le côté supérieur (11) en position de montage du panneau rayonnant de plafond (2), détourné de la pièce à conditionner en température, s'étendant dans sa direction longitudinale ou sa direction transversale, **caractérisée en ce que** le dispositif d'absorption (5) est réalisé sous forme de boîte d'absorption et ses parois (8, 11, 13) sont réalisées sous forme de surfaces fermées sans ouvertures de perforation (3).

2. Structure de surface rayonnante selon la revendication 1, **caractérisée en ce qu'**une couche isolante (4) est disposée sur le côté du panneau rayonnant de plafond (2) détourné de la pièce à conditionner en température.

3. Structure de surface rayonnante selon la revendication 1 ou 2, **caractérisée en ce que** le dispositif d'absorption est réalisé sous forme parallélépipédique ou tubulaire.

4. Structure de surface rayonnante selon l'une quelconque des revendications 1 à 3, **caractérisée en ce que** le dispositif d'absorption est réalisé en acier ou en aluminium.

5. Structure de surface rayonnante selon l'une quelconque des revendications 1 à 4, **caractérisée en ce qu'**au moins un autre dispositif d'absorption (5.1, 5.2) s'étendant parallèlement au dispositif d'absorption (5) disposé au centre dans la direction longitudinale du panneau rayonnant de plafond (2) est disposé des deux côtés de celui-ci.

6. Structure de surface rayonnante selon la revendication 5, **caractérisée en ce que** les autres dispositifs d'absorption (5.1, 5.2) sont en aluminium ou en acier et leurs parois latérales sont réalisées sous forme fermée sans ouvertures de perforation (3).

7. Structure de surface rayonnante selon la revendication 5, **caractérisée en ce que** les autres dispositifs d'absorption (5.1, 5.2) présentent des parois frontales fermées (13) sans ouvertures de perforation et un côté supérieur fermé (11) sans ouvertures de perforation.

8. Structure de surface rayonnante selon l'une quelconque des revendications 5 à 7, **caractérisée en ce que** les dispositifs d'absorption (5, 5.1, 5.2) sont remplis d'un matériau isolant (10), en particulier de laine minérale.

9. Structure de surface rayonnante selon l'une quelconque des revendications 1 à 8, **caractérisée en ce que** les dispositifs d'absorption (5, 5.1, 5.2) sont revêtus à l'intérieur d'un non-tissé acoustique.

10. Structure de surface rayonnante selon l'une quelconque des revendications 1 à 9, **caractérisée en ce que** le rapport entre la surface de base de l'au moins un dispositif d'absorption (5) et la surface de base du panneau rayonnant de plafond (2) est supérieur 0,05 et inférieur à 0,5, en particulier de 0,1 à 0,2.

11. Structure de surface rayonnante selon l'une quelconque des revendications 1 à 10, **caractérisée en ce que** les dispositifs d'absorption (5, 5.1, 5.2) sont espacés des bords libres du panneau rayonnant de plafond (2) d'une distance qui correspond au moins à la hauteur du dispositif d'absorption (5).
